# EUROPÄISCHE PATENTANMELDUNG

(11) **EP 2 248 660 A2**
(43) Veröffentlichungstag der Anmeldung: **10.11.2010**
(21) Anmeldenummer: 10004241.5
(22) Anmeldetag: 21.04.2010
(51) Int. Cl.: B30B 5/02, B30B 15/30

(54) **Presse zum Laminieren von im Wesentlichen plattenförmigen Werkstücken**

(30) Priorität: 07.05.2009 DE 102009020172
(71) Anmelder: Robert Bürkle GmbH, 72250 Freudenstadt (DE)
(72) Erfinder: Damm, Norbert, 76689 Karlsdorf-Neuthard (DE); Renz, Wolfgang, 72250 Freudenstadt (DE)
(74) Vertreter: Lemcke, Brommer & Partner

(57) **Zusammenfassung**

Die vorliegende Erfindung betrifft eine Presse zum Laminieren von im Wesentlichen plattenförmigen Werkstücken unter Druck- und Wärmeeinwirkung, mit einer unteren Pressenhälfte (2) und einer oberen Pressenhälfte (3), welche relativ zueinander bewegbar sind, um die Presse zu öffnen und zu schließen, wobei die untere Pressenhälfte (2) und die obere Pressenhälfte (3) mittels umlaufender, ein- oder mehrteiliger Dichtungen (12, 13) im geschlossenen Zustand eine Vakuumkammer (14) bilden, mit einer flexiblen Membran (11), die die Vakuumkammer (14) in einen zur Aufnahme von mindestens einem Werkstück (1) vorgesehenen, evakuierbaren Produktraum (16) und einen evakuierbaren und/oder druckbeaufschlagbaren Druckraum (17) unterteilt, wobei die Membran (11) so ausgestaltet und angeordnet ist, dass sie aufgrund eines durch Evakuieren des Produktraums (16) und/oder durch Druckbeaufschlagen des Druckraums (17) erzeugten Druckunterschieds in der Vakuumkammer (14) das Werkstück (1) direkt oder indirekt gegen eine Unterseite (2) der Vakuumkammer (14) presst, und mit einem durch die Vakuumkammer (14) verlaufenden Transportband (4), auf dem das Werkstück (1) angeordnet ist. Das Transportband (4) ist zumindest an seiner dem Werkstück (1) zugewandten Oberfläche solcherart strukturiert, dass ein Gastransport innerhalb des Transportband-Volumens, und zwar zumindest teilweise entlang von dessen Oberfläche, möglich ist.

## Beschreibung

Die Erfindung betrifft eine Presse zum Laminieren von im Wesentlichen plattenförmigen Werkstücken unter Druck- und Wärmeinwirkung nach dem Oberbegriff des Anspruchs 1.

Eine Presse der vorliegenden Art umfasst demnach eine untere Pressenhälfte und eine obere Pressenhälfte, welche relativ zueinander bewegbar sind, um die Presse zu öffnen und zu schließen. Die untere Pressenhälfte und die obere Pressenhälfte bilden in geschlossenem Zustand mittels umlaufender, ein- oder mehrteiliger Dichtungen eine Vakuumkammer, innerhalb der ein oder mehrere Werkstücke laminiert werden. Eine flexible Membran teilt die Vakuumkammer in einen zur Aufnahme von mindestens einem Werkstück vorgesehenen, evakuierbaren Produktraum und einen evakuierbaren und/oder druckbeaufschlagbaren Druckraum. Aufgrund eines durch Evakuieren des Produktraums und/oder durch Druckbeaufschlagen des Druckraums erzeugten Druckunterschieds in der Vakuumkammer wird die Membran gegen das Werkstück gepresst, wodurch sie das Werkstück direkt oder indirekt gegen eine Unterseite der Vakuumkammer drückt und hierdurch die zum Laminieren notwendige Auflast auf das Werkstück aufbringt. In der Regel wird die Unterseite der Vakuumkammer durch eine Heizplatte gebildet, so dass die zum Laminieren notwendige Prozesswärme direkt beim Pressvorgang in das Werkstück eingeleitet wird. Es sind jedoch auch andere Arten des Einbringens der Prozesswärme möglich. Das Werkstück liegt hierbei nicht unmittelbar auf der Unterseite der Vakuumkammer auf, sondern auf einem Transportband, das seinerseits während des Laminiervorgangs auf der Unterseite der Vakuumkammer aufliegt.

Eine Presse der vorliegenden Art wird bevorzugt zum Laminieren von Photovoltaik-Modulen verwendet. Diese bestehen üblicherweise aus einer Solarzellenschicht, die mitsamt ihren elektrischen Kontaktierungselementen zwischen eine Glasplatte und eine wetterfeste Folie oder zwischen zwei Glasplatten angeordnet und mittels einer oder mehrerer Kleberschichten mit den Glasplatten bzw. Folien laminiert und so feuchtigkeitsdicht sowie wetterfest in einen lichtdurchlässigen Schichtverbund eingekapselt wird.

Um nun ein Werkstück bzw. mehrere Werkstücke gleichzeitig - der Einfachheit halber wird im Folgenden jeweils nur von einem Werkstück gesprochen - zu laminieren, wird dieses in den Produktraum der Vakuumkammer verbracht und die Vakuumkammer geschlossen. Danach wird normalerweise zunächst der Druckraum der Vakuumkammer evakuiert, um die Membran nach oben zur oberen Kammerhälfte zu ziehen. Sodann, üblicherweise mit einem gewissen Zeitversatz, wird auch der Produktraum evakuiert, wobei das Evakuieren beider Räume der Vakuumkammer so geregelt wird, dass immer ein Differenzdruck zwischen dem Druckraum und dem Produktraum bestehen bleibt, der die Membran in der oberen Kammerhälfte hält und verhindert, dass die Membran vorzeitig in Kontakt mit dem Werkstück gelangt.

Wenn der Produktraum der Pressenkammer bis zu einem Solldruck evakuiert worden ist, der in der Regel unterhalb von 1 mbar liegt, wird der Druckraum belüftet, so dass sich die Druckdifferenz zwischen dem Druckraum und dem Produktraum umkehrt und sich die Membran auf das Werkstück auflegt. Durch Regeln des Drucks im Druckraum wird sodann ein gewünschter Anpressdruck der Membran eingestellt, um die für das Laminieren notwendige Auflast auf das Werkstück zu erzeugen.

Die für den Laminiervorgang notwendige Prozesswärme wird üblicherweise dadurch in das Werkstück eingebracht, dass die Unterseite der Vakuumkammer als Heizplatte ausgebildet ist, gegen die das Werkstück durch die Membran gedrückt wird. Der Druck und die Prozesswärme sorgen dann zusammen für das Erweichen bzw. Aktivieren der Kleberschicht und gegebenenfalls für deren Aushärten bzw. Vernetzen.

Das rasche Evakuieren insbesondere des Produktraums der Vakuumkammer - möglichst noch vor einem nennenswerten Erwärmen des Werkstücks - ermöglicht, dass etwaige Lufteinschlüsse (Legeluft zwischen den Werkstückschichten) oder gegebenenfalls beim Erwärmen gebildete Gase aus dem Werkstück herausgezogen werden, bevor ein Härten bzw. Vernetzen des Klebers in der Kleberschicht beginnt. Denn Gasblasen im fertig laminierten Werkstück beeinträchtigen dessen Lebensdauer ganz erheblich oder führen im ungünstigsten Fall zur sofortigen Unbrauchbarkeit des Werkstücks, also zur Produktion von Ausschuss.

Nach dem Aufheizen des Werkstücks unter Vakuum beginnt dann durch Auflegen der Membran der eigentliche Laminiervorgang, währenddessen die Membran die hierfür notwendige Auflast auf das Werkstück aufbringt. Die in der Regel hochelastische Membran schmiegt sich aufgrund der Druckdifferenz zwischen dem Produktraum und dem Druckraum sowohl oberseitig, als auch an allen Seitenflächen des Werkstücks eng an dieses an, wobei sie neben dem Werkstück, bis unmittelbar an dieses heranreichend, gegen die Unterseite der Vakuumkammer drückt. Da ein Transportband vorgesehen ist, auf dem das Werkstück in die Vakuumkammer hinein und aus diesem heraus transportiert wird, und welches deshalb, die Vakuumkammer durchgreifend, auf der Unterseite der Vakuumkammer aufliegt, wird zum einen das Werkstück gegen das Transportband und somit indirekt gegen die Unterseite der Vakuumkammer gepresst, und andererseits liegt die Membran unmittelbar neben dem Werkstück auch auf der Oberseite des Transportbands auf.

Dadurch, dass sich die Membran allseitig eng an das Werkstück anlegt, schließt sie das Werkstück gasdicht ab und verhindert insbesondere, dass während der eigentlichen Laminierphase etwa im Werkstück noch entstehende Gase herausgezogen und abgesaugt werden können. Dies erhöht die Gefahr einer Blasenbildung im Werkstück ganz erheblich.

Dieser Effekt tritt vornehmlich dann ein, wenn der Produktraum während der Laminierphase nicht mehr weiter abgesaugt wird. Jedoch auch dann, wenn in der Unterseite der Vakuumkammer Absaugöffnungen vorhanden sind, der Produktraum also nicht zur Seite hin, sondern nach unten evakuiert wird, und auch während des Laminiervorgangs weiter abgesaugt wird, verhindert die Membran durch ihr elastisches Anlegen an die Außenkontur des Werkstücks, dass im Werkstück entstehende Gase bis zu den Absaugöffnungen gelangen können; denn diese werden von der Membran abgedeckt.

Bisherige Lösungsansätze suchen diese Probleme dadurch zu lösen, dass die Membran in einem Doppelrahmen an der oberen Kammerhälfte fixiert wird. Im hochgesaugten Zustand der Membran während der Evakuierphase und im geschlossenen Zustand der Vakuumkammer ohne Differenzdruck ist die Membran hierdurch von der Ebene, auf der das Werkstück aufliegt, um die Höhe der unteren Doppelrahmenhälfte beabstandet, üblicherweise um eine Höhe von 15 bis 50 mm. Da es regelmäßig notwendig ist, die Membran zu wechseln, ist ein solcher Doppelrahmen jedoch nicht optimal, denn er verkompliziert den Wechsel der Membran und verlängert damit die Ausfallzeit der Presse bei einem notwendigen Membranwechsel.

Neben der eben genannten nachteiligen Eigenschaften eines Doppelrahmens wird das Problem außerdem nur unzureichend gelöst. Dies hängt sehr wahrscheinlich damit zusammen, dass sich die Membran beim Lastwechsel vom Evakuierungszustand im Druckraum zum Druckzustand in den Klemmbereichen am Doppelrahmen zuerst entspannt und dann wegen der Saugwirkung der Absaugquerschnitte im Produktraum sich zuerst auf die Randbereiche der Unterseite der Vakuumkammer auflegt und hierdurch die Absaugöffnungen abdichtet. Die selbst bei einem Restdruck von nur 1 mbar im Produktraum verbleibenden Gase werden wegen des kleiner werdenden Restvolumens dann wieder auf höheren Druck verdichtet. Zusätzlich beim Prozess entstehende Prozessgase, wie Restfeuchtigkeit, Katalysatorgase, dampfförmige Weichmacher etc., können nicht mehr abgeführt werden. Dies führt letztlich zu einer Blasenbildung im Werkstück, die dessen Qualität stark beeinträchtigt.

Der vorliegenden Erfindung liegt daher die Aufgabe zugrunde, eine Presse der eingangs genannten Art vorzuschlagen, bei der eine Blasenbildung im Werkstück verhindert oder zumindest deutlich verringert wird.

Gelöst ist diese Aufgabe durch eine Presse mit den Merkmalen des Anspruchs 1. Bevorzugte Ausgestaltungen und Weiterbildungen der erfindungsgemäßen Presse sind in den Ansprüchen 2 bis 11 niedergelegt.

Die erfindungsgemäße Lösung des gestellten Problems besteht also im Wesentlichen darin, dass die beim Pressvorgang unmittelbar am Werkstück anliegenden Elemente der Presse eine zum Werkstück hin solcherart strukturierte Oberfläche aufweisen, dass zumindest teilweise entlang der Oberfläche verlaufende, gasleitende Kanäle darin ausgebildet sind. Diese entlang der Oberfläche verlaufenden Kanäle können sich über die gesamte Länge oder Breite des Werkstücks erstrecken, sie können jedoch auch sehr kurz ausgebildet sein, soweit sie in dann vertikale Öffnungen oder innerhalb des Werkstücks verlaufende Kanäle oder dergleichen münden.

Im Rahmen der vorliegenden Erfindung wird vorgeschlagen, zumindest das Transportband zu modifizieren. Erfindungsgemäß soll es zumindest an seiner dem Werkstück zugewandten Oberfläche solcherart strukturiert sein, dass ein Gastransport innerhalb des Transportband-Volumens, und zwar zumindest teilweise entlang von dessen Oberfläche, möglich ist.

Weitere beim Pressvorgang unmittelbar am Werkstück anliegenden Elemente der Presse können die Oberfläche der Unterseite der Vakuumkammer, insbesondere also die Oberfläche einer Heizplatte, sowie zusätzlich oder alternativ die dem Werkstück zugewandte Oberfläche der Membran sein.

Aufgrund der erfindungsgemäßen Maßnahmen können also beim Laminierprozess etwa entstehende oder noch im Produktraum verbliebene Gase trotz eng aufgelegter Membran im Wesentlichen entlang der Oberfläche der Vakuumkammerunterseite und gegebenenfalls auch der Membranunterseite bis zu Absaugöffnungen des Produktraums gelangen und dort auch während des eigentlichen Laminiervorgangs abgesaugt werden.

Transportbänder, die beim Laminieren von insbesondere Photovoltaik-Modulen verwendet werden, sind üblicherweise vergleichsweise dünn, d.h. ihre Dicke liegt unter einem Millimeter, um das Abdichten der umlaufenden Dichtungen zwischen der unteren Pressenhälfte und der oberen Pressenhälfte so wenig wie möglich zu behindern; denn es liegt in der Natur eines Transportbandes, dass es die Vakuumkammer auch bei geschlossener Presse durchgreift und somit an zwei Seiten der Vakuumkammer in den umlaufenden Dichtungen geklemmt wird.

Übliche Transportbänder sind PTFE-beschichtete Gewebebänder, vorzugsweise dicht gewebte Glasfasergewebe mit PTFE-ummantelten Fasern, die zusätzlich beidseitig mit PTFE beschichtet sind. Die PTFE-Beschichtung hat sich als sehr wirksam gegen unbeabsichtigt aus den Werkstücken austretende Kleberreste erwiesen. Die dünne Ausbildung der Transportbänder, die im Bereich der Werkstücke sogar möglichst nur zwischen 0,2 und 0,5 mm dick sind, um einen möglichst guten Wärmeübergang zwischen der Heizplatte und dem Werkstück zu gewährleisten, bestehen aus sehr dünnen Fasern und müssen demgemäß entsprechend engmaschig gewebt sein. Hierdurch und durch die zusätzliche Beschichtung mit PTFE sind diese üblichen Transportbänder mit einer annährend ebenen, glatten Oberfläche und einer geschlossenporigen Gewebestruktur versehen. Dies ist bislang aufgrund der notwendigen Abdichtung der Vakuumkammer nach außen, wie oben erwähnt, sogar ausdrücklich erwünscht gewesen.

Die erfindungsgemäße Modifizierung des Transportbandes erfolgt vorzugsweise dadurch, dass das Transportband als Netzgewebe ausgebildet ist. Eine Netzgewebestruktur bildet dreidimensional wirkende Kanäle, die neben vertikalen Querschnitten auch horizontale Querschnitte aufweisen. Die sowohl in vertikaler als auch in horizontaler Richtung wirkenden gasleitenden Querschnitte einer Netzgewebestruktur beruhen darauf, dass in jeder Masche des Netzgewebes vier Überkreuzungen der Gewebefäden vorliegen und diese vielzähligen Kreuzungspunkte zu den über und unter dem Netzgewebe liegenden Nachbarflächen als lokale, winzige Abstandshalter fungieren. Die Summe aller so gebildeten Knotenpunkt-Querschnitte reicht auch im angepressten Zustand dieser Nachbarflächen aus, um Restluft und entstehende Prozessgase durch gasführende Kanäle entlang der Transportbandoberfläche zu den Absaugöffnungen des Produktraums abzuführen.

Die Netzgewebestruktur des Transportbands wird vorzugsweise so ausgebildet, dass die Maschenweite der Gewebestruktur im Verhältnis zur Gewebefadendicke etwa 1:1 bis 5:1 beträgt, vorzugsweise etwa 3:1. Die Gewebefäden können wie bisher PTFE-getränkt und mit PTFE umhüllt sein und dennoch die erfindungsgemäße gasableitende Wirkung beibehalten.

Da eine solche Struktur des Transportbands die Leckagerate an derjenigen Stelle naturgemäß erhöht, an der das Transportband durch die Dichtungen zwischen der oberen Pressenhälfte und der unteren Pressenhälfte hindurchtritt, bietet es Vorteile, wenn das Transportband im wesentlichen nur in demjenigen Bereich, auf dem das Werkstück aufliegt, als Netzgewebe oder mit sonstigen Oberflächenkanälen versehen ausgebildet ist. In denjenigen Bereichen des Transportbands, auf denen die Dichtungen der oberen und/oder unteren Pressenhälfte zu liegen kommen, kann das Transportband demgegenüber mit im Wesentlichen geschlossener, ebener Oberfläche versehen sein. Als weitere vorteilhafte Ausgestaltung des Transportbands wird vorgeschlagen, dieses als Netzgewebe aus bis ca. 200 °C temperaturstabilen Kunststofffäden zu bilden, wobei zusätzlich Metallfäden eingearbeitet sind, um die Wärmeleitfähigkeit des Transportbandes zu erhöhen und so einen optimalen Wärmeübergang zwischen der Unterseite der Vakuumkammer, die üblicherweise als Heizplatte ausgebildet ist, und dem Werkstück zu gewährleisten.

Das Transportband kann, insbesondere wenn es als Netzgewebe ausgebildet ist, zumindest in demjenigen Bereich, auf dem das Werkstück aufliegt, sowohl horizontal als auch vertikal gasdurchlässig ausgebildet sein, um ein optimales Ausleiten von etwa entstehenden Gasen oder Restgasen beim eigentlichen Laminiervorgang zu gewährleisten. Um in diesem Fall die Unterseite der Vakuumkammer vor etwa durch das Transportband durchtretenden Klebstoffresten zu schützen, kann vorgesehen sein, zwischen das Transportband und die Unterseite der Vakuumkammer eine dünne Schutzfolie einzubringen.

Schließlich kann das Transportband zumindest in dem Bereich, auf dem das Werkstück aufliegt, auch aus einem Mehrschichtverbund aufgebaut sein, der aus einem offenporigen Netzgewebe und einer oder mehreren gasdichten Folien besteht.

Zum Schutz der Membran vor adhäsiven Klebstoffresten ist es insbesondere bei Photovoltaik-Laminatoren üblich, zwischen die Membran und das Werkstück eine Trennfolie einzubringen. Im Rahmen der vorliegenden Erfindung könnte eine solche Trennfolie ebenfalls mit einer solcherart strukturierten Oberfläche versehen sein, dass ein Gastransport entlang dieser Oberfläche möglich ist.

Im Rahmen der vorliegenden Erfindung ist es allerdings besonders vorteilhaft, wenn die Trennfolie gasdicht ausgebildet und so dimensioniert ist, dass sie einen Kontakt der Membran mit Gasen verhindert, die während des Laminiervorgangs aus dem Werkstück austreten. Denn die üblicherweise verwendeten Silikon-Membrane oder Membrane aus Naturkautschuk werden erfahrungsgemäß von den Gasen angegriffen, die aus den üblicherweise zur Herstellung von Photovoltaik-Modulen verwendeten EVA-Klebefolien (Ethylenvinylacetat) beim Laminieren austreten. Dies führt zu stark verkürzten Standzeiten der Membrane.

Insbesondere durch eine Kombination eines dreidimensional strukturierten Transportbands mit einer gasdichten, glatten Trennfolie kann in der Pressphase mit anliegender Membran ein innerer Prozessraum im Produktraum gebildet werden, der zur Membranunterseite keinen direkten Gaszutritt ermöglicht.

Die Trennfolie ist im übrigen vorzugsweise so dimensioniert, dass sie die Membran innerhalb der Vakuumkammer überdeckt und hierdurch gegenüber dem Produktraum der Presse vollständig abdeckt. Insbesondere reicht die Trennfolie dann also, in Transportrichtung der Werkstücke gesehen, links und rechts über gegebenenfalls dort angeordnete Absaugöffnungen hinweg bis unter die Rahmenkonstruktion der Membran.

Zwei Ausführungsbeispiele einer erfindungsgemäß ausgestalteten Presse sind im folgenden anhand der beigefügten Zeichnungen näher beschrieben und erläutert. Es zeigen:
- Figur 1: eine schematische Schnittdarstellung einer erfindungsgemäß ausgestalteten Presse, quer zur Durchlaufrichtung;
- Figur 2: eine schematische Schnittdarstellung der Presse aus Figur 1, parallel zur Durchlaufrichtung;
- Figur 3: eine Darstellung wie Figur 1, jedoch eines modifizierten Ausführungsbeispiels;
- Figur 4, 5 und 6: schematische Schnittdarstellungen wie Figur 1, jedoch einer Presse nach dem Stand der Technik, in geöffnetem und ge- schlossenen Zustand sowie während der Laminierphase.

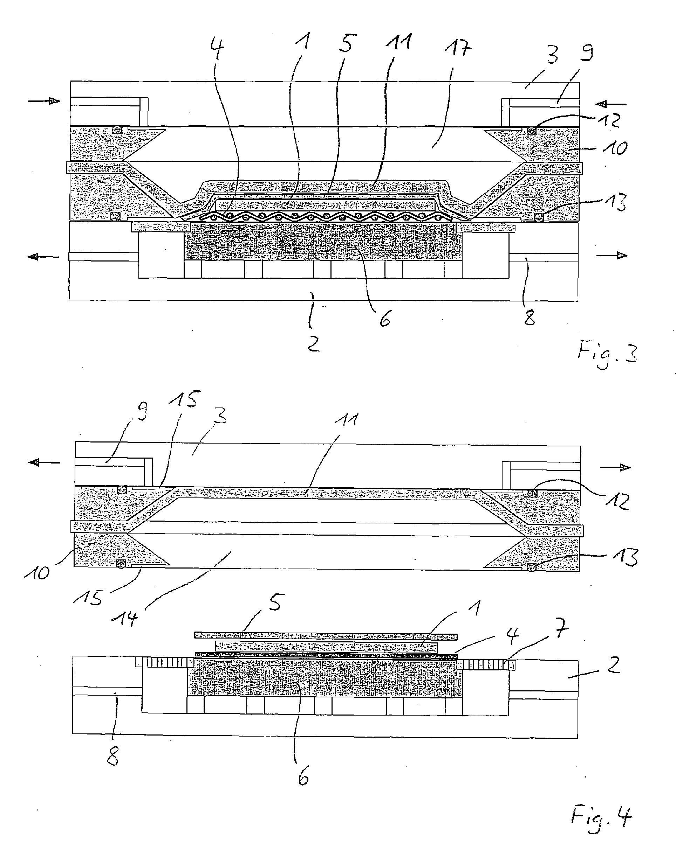

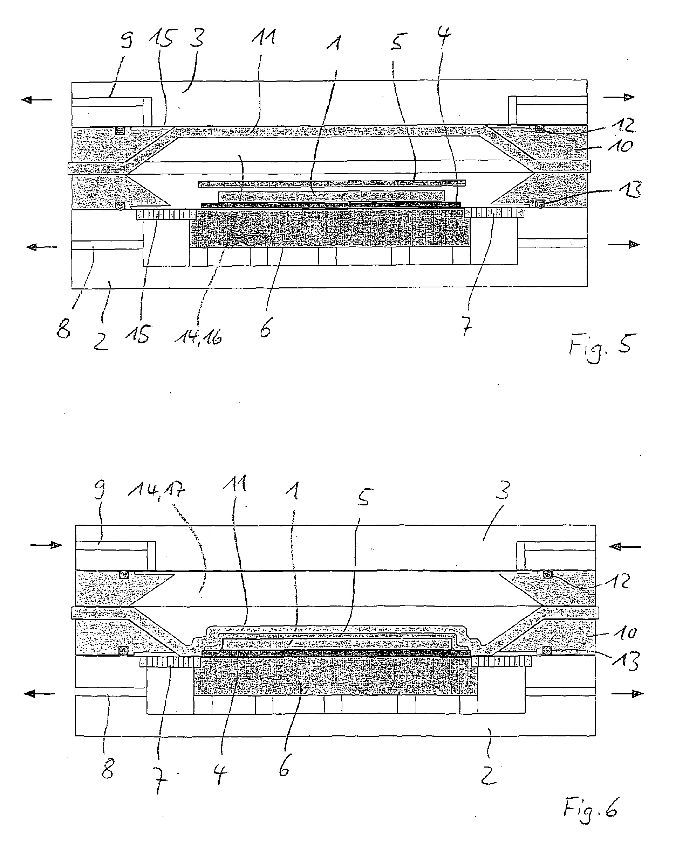

Zunächst soll anhand der Figuren 4 bis 6 der bisherige Stand der Technik skizziert werden. In diesen Figuren ist schematisch eine Presse zum Laminieren von Photovoltaik-Modulen nach dem Stand der Technik dargestellt, und zwar in einer Schnittdarstellung quer zur Durchlaufrichtung eines Photovoltaik-Moduls 1, wobei Figur 4 eine geöffnete Presse, Figur 5 eine geschlossene Presse beim Evakuieren und Figur 6 eine geschlossene Presse beim eigentlichen Laminiervorgang zeigen.

In der Presse, die aus einer unteren Pressenhälfte 2 und einer oberen Pressenhälfte 3 gebildet ist, ist ein Photovoltaik-Modul 1 zwischen einem Förderband 4 und einer Trennfolie 5 angeordnet. Das Förderband 4 liegt auf der unteren Pressenhälfte 2 auf, die in diesem Bereich eine Heizplatte 6 aufweist, um die benötigte Prozesswärme in das Photovoltaik-Modul 1 einzubringen. In Durchlaufrichtung gesehen seitlich neben der Heizplatte 6 befinden sich in der unteren Pressenhälfte 2 mehrere Absaugöffnungen 7, die in unteren Kanälen 8 münden. Die unteren Kanäle 8 sind mit (hier nicht dargestellten) Evakuierungs- und Belüftungsmitteln verbunden. Das Transportband 4 dient dazu, das Photovoltaik-Modul 1 in die Presse einzubringen und aus dieser wieder herauszufördern, so dass es die Presse senkrecht zur Zeichenebene durchgreift.

Die obere Pressenhälfte 3 ist mit oberen Kanälen 9 zum Evakuieren, Belüften oder Druckbeaufschlagen versehen, und sie trägt einen Doppelrahmen 10, in den eine Membran 11 eingespannt ist. Der Doppelrahmen 10 bildet mit oberen 12 und unteren, umlaufenden Dichtungen 13, die jeweils gegen die obere Pressenhälfte 3 und die untere Pressenhälfte 2 abdichten, eine mehrteilige Dichtung zum gasdichten Verschließen der Presse, wobei er in seinem Inneren, zusammen mit den angrenzenden Pressenhälften 2, 3, eine Vakuumkammer 14 umschreibt. Mittels Aussparungen 15 steht die Vakuumkammer 14 mit den unteren und oberen Kanälen 8, 9 in Verbindung. Die Membran 11 teilt die Vakuumkammer 14 hierbei in einen unterhalb der Membran liegenden Produktraum 16, der mit den unteren Kanälen 8 in Verbindung steht, und in einen oberhalb der Membran 11 liegenden Druckraum 17, der mit den oberen Kanälen 9 verbunden ist.

Figur 4 zeigt nun die Phase, in der das Photovoltaik-Modul 1 auf dem Transportband 4 mit aufliegender Trennfolie 5 in den Bereich der Vakuumkammer 14 in die Presse eingefahren worden ist; die Presse ist hierbei noch geöffnet. Um die Membran 11 vor mechanischen Beschädigungen zu schützen, wird sie über die oberen Kanäle 9 an die obere Pressenhälfte 3 angesaugt.

Durch Absenken der oberen Pressenhälfte 3 wird die Presse sodann geschlossen, wie Figur 5 zeigt. Über die oberen Kanäle 9 und die unteren Kanäle 8 wird die Vakuumkammer 14 evakuiert, wobei allerdings darauf geachtet wird, dass der Druck oberhalb der Membran 11 geringer ist, als derjenige unterhalb der Membran 11, so dass die Membran 11 nach oben zur oberen Pressenhälfte 3 hin gezogen bleibt. Hierdurch ist in Figur 5 lediglich der Produktraum 16 sichtbar, jedoch nicht der Druckraum 17.

Nachdem der Produktraum 16 bis auf einen Enddruck von etwa einem mbar evakuiert worden ist, wird der Druckraum 17 über die oberen Kanäle 9 belüftet, so dass sich die in Figur 6 gezeigte Situation ergibt. Die Membran 11 legt sich aufgrund des herrschenden Druckunterschieds auf das Photovoltaik-Modul 1 auf und presst dieses gegen die Heizplatte 6. Die Trennfolie 5 verhindert hierbei einen direkten Kontakt der Membran 11 mit dem Photovoltaik-Modul 1, so dass dort etwa austretender Klebstoff nicht an die Membran 11 gelangen kann. Die in Figur 6 gezeigte Phase ist die eigentliche Laminierphase, in der das Photovoltaik-Modul 1 mittels der Membran 11 zusammengepresst wird, während es von der Heizplatte 6 über das Transportband 4 mit Wärme beaufschlagt wird.

Wie anhand Figur 6 gut zu erkennen ist, schmiegt sich die Membran 11 sehr eng an den aus Photovoltaik-Modul 1, Transportband 4 und Trennfolie 5 gebildeten Schichtkörper an, insbesondere auch randseitig, so dass eine Art innerer Prozessraum gebildet wird, der von den Absaugöffnungen 7 abgetrennt ist. Restgase und Gase, die beim Laminieren im Werkstück entstehen, können demnach nicht mehr abgesaugt werden und führen zur Blasenbildung im Photovoltaik-Modul 1. Dieser Effekt wird ganz erheblich dadurch verstärkt, dass die Membran 11, wie Figur 6 verdeutlicht, die Absaugöffnungen 7 in den an das Transportband 4 angrenzenden Bereichen gasdicht abdeckt. Eine gewisse Verzögerung dieses Effekts tritt immerhin dadurch ein, dass die Membran 11 aufgrund des verwendeten Doppelrahmens 10 in einem signifikanten Höhenabstand zum Photovoltaik-Modul 1 angeordnet ist und dementsprechend zuerst gegen dieses drückt, bevor die Absaugöffnungen 7 abgedeckt werden. Erfindungsgemäß ist jedoch erkannt worden, dass dies eine eher theoretische Überlegung ist, die in der Praxis nicht bestätigt werden konnte.

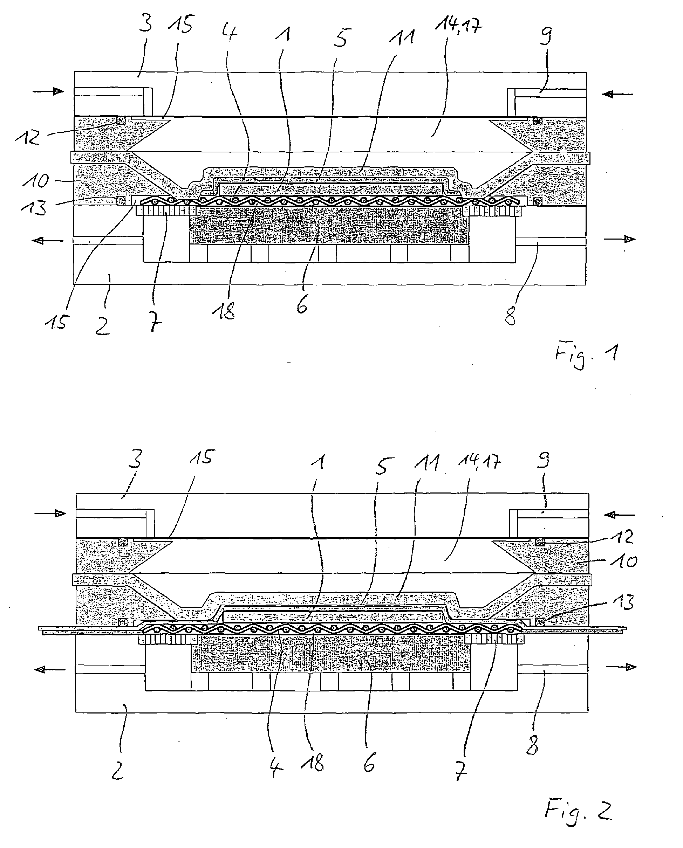

Die Figuren 1 und 2 zeigen nun beispielhaft eine Presse, in der die erfindungsgemäße Lösung des Problems umgesetzt worden ist, wobei Figur 1 eine Darstellung wie diejenige der Figuren 4 bis 6 ist, also ein schematischer Schnitt durch die Presse quer zur Durchlaufrichtung der Werkstücke, während Figur 2 ein Schnitt entlang der Durchlaufrichtung ist.

Der entscheidende Unterschied der in den Figuren 1 und 2 gezeigten Presse zu dem in den Figuren 4 bis 6 dargestellten Stand der Technik besteht nun darin, dass das Transportband 4 mit einer offenporigen Netzgewebestruktur versehen ist und damit innerhalb seiner Querschnittsfläche bzw. innerhalb seines Volumens dreidimensional, also in vertikaler und horizontaler Richtung wirkende gasabführende Querschnitte aufweist. Die Figuren 1 und 2 zeigen die eigentliche Laminierphase und verdeutlichen, wie das Netzgewebe des Transportbandes 4 die Bildung eines hermetisch abgeschlossenen inneren Prozessraums verhindert. Denn Gase, die beim Laminieren im Photovoltaik-Modul 1 entstehen, können entlang der an der Oberfläche des Transportbandes 4 verlaufenden gasleitende Kanäle 18, oder zumindest so weit entlang der Oberfläche des Transportbandes 4 abgeleitet werden, bis diese durch das Transportband 4 hindurchtreten oder innerhalb dessen weiter transportiert werden können, und zwar bis zu den Absaugöffnungen 7, über die das Transportband 4 wegen einer beabsichtigten Überbreite desselben hinausreicht. Im Ergebnis können Gase, die beim eigentlichen Laminiervorgang im Photovoltaik-Modul 1 entstehen, oder die beim Absenken der Membran 11 eingeschlossen worden sind, über die Absaugöffnungen 7 und die unteren Kanäle 8 aus dem Produktraum 16 entfernt werden; eine Blasenbildung im Werkstück wird insoweit verhindert.

Wie Figur 2 zeigt, ist das Transportband 4 des vorliegenden Ausführungsbeispiels nur in demjenigen Bereich als Netzgewebe ausgebildet, in dem das Photovoltaik-Modul 1 zu liegen kommt, und in dem sich die Absaugöffnungen 7 befinden. Im Durchlaufrichtung davor und danach ist das Transportband 4, wie im Stand der Technik üblich, als möglichst dünnes und glatt ausgebildetes Band gefertigt, um die Dichtwirkung der unteren Dichtung 13 des Doppelrahmens 10 gegen die untere Pressenhälfte 2 nicht zu gefährden.

Figur 3 zeigt schließlich in einer Figur 1 entsprechenden Darstellung eine Modifikation des hier beschriebenen Ausführungsbeispiels für eine erfindungsgemäß ausgestaltete Presse. Eine Änderung besteht darin, dass in Durchlaufrichtung gesehen seitlich neben der Heizplatte 6 hier keine Absaugöffnungen vorgesehen sind; diese finden sich vielmehr lediglich stromaufwärts und stromabwärts der Heizplatte 6. Ferner ist hier das Transportband 4 nicht in Überbreite gefertigt, so dass es, wie im Stand der Technik, lediglich die Heizplatte 6 überdeckt. Dafür ist die Trennfolie 5 überbreit ausgestaltet, so dass diese seitlich sowohl das Photovoltaik-Modul 1 als auch das Transportband 4 überdeckt und so verhindert, dass die Membran 11 mit Gasen in Verbindung kommt, die vom Photovoltaik-Modul 1, und dort insbesondere von den darin verwendeten Klebern stammen. Da die Trennfolie 5 die Presse ebenso wie das Transportband 4 durchgreift (vgl. Figur 2), ist auch im Bereich der Absaugöffnungen 7 nicht zu befürchten, dass die Membran 11 mit für sie schädlichen Gasen aus dem Photovoltaik-Modul 1 in Berührung kommt.

Da die hier gewählten Transportbänder 4 mit dreidimensional offenporiger Struktur versehen sind, kann es schließlich (hier nicht dargestellt) vorteilhaft sein, zwischen das Transportband 4 und die Heizplatte 6 eine sehr dünne, geschlossenporige und PTFE-beschichtete Folie zum Schutz der Heizplatte 6 vor Kleberresten anzuordnen.

## Patentansprüche

1. Presse zum Laminieren von im Wesentlichen plattenförmigen Werkstücken unter Druck- und Wärmeeinwirkung, mit einer unteren Pressenhälfte (2) und einer oberen Pressenhälfte (3), welche relativ zueinander bewegbar sind, um die Presse zu öffnen und zu schließen, wobei die untere Pressenhälfte (2) und die obere Pressenhälfte (3) mittels umlaufender, ein- oder mehrteiliger Dichtungen (12, 13) im geschlossenen Zustand eine Vakuumkammer (14) bilden, mit einer flexiblen Membran (11), die die Vakuumkammer (14) in einen zur Aufnahme von mindestens einem Werkstück (1) vorgesehenen, evakuierbaren Produktraum (16) und einen evakuierbaren und/oder druckbeaufschlagbaren Druckraum (17) unterteilt, wobei die Membran (11) so ausgestaltet und angeordnet ist, dass sie aufgrund eines durch Evakuieren des Produktraums (16) und/oder durch Druckbeaufschlagen des Druckraums (17) erzeugten Druckunterschieds in der Vakuumkammer (14) das Werkstück (1) direkt oder indirekt gegen eine Unterseite (2) der Vakuumkammer (14) presst, und mit einem durch die Vakuumkammer (14) verlaufenden Transportband (4), auf dem das Werkstück (1) angeordnet ist,
**dadurch gekennzeichnet,**
**dass** das Transportband (4) zumindest an seiner dem Werkstück (1) zugewandten Oberfläche solcherart strukturiert ist, dass ein Gastransport innerhalb des Transportband-Volumens, und zwar zumindest teilweise entlang von dessen Oberfläche, möglich ist.

2. Presse nach Anspruch 1,
**dadurch gekennzeichnet,**
**dass** das Transportband (4) zumindest in einem Bereich, auf dem das Werkstück (1) aufliegt, als Netzgewebe ausgebildet ist.

3. Presse nach einem der Ansprüche 1 oder 2,
**dadurch gekennzeichnet,**
**dass** das Transportband (4) zumindest in einem Bereich, auf dem das Werkstück (1) aufliegt, aus einem Mehrschichtverbund bestehend aus einem offenporigen Netzgewebe und einer gasdichten Folie aufgebaut ist.

4. Presse nach einem der Ansprüche 2 oder 3,
**dadurch gekennzeichnet,**
**dass** das Transportband (4) in denjenigen Bereichen, in denen die Dichtungen (13) der oberen und/oder unteren Pressenhälfte (2, 3) zu liegen kommen, mit im Wesentlichen geschlossener, ebener Oberfläche versehen ist.

5. Presse nach einem der Ansprüche 2 bis 4,
**dadurch gekennzeichnet,**
**dass** das Netzgewebe des Transportbands aus bis ca. 200 °C temperaturstabilen Kunststofffäden gebildet ist, wobei zusätzlich Metallfäden zum Verbessern der Wärmeleitfähigkeit eingearbeitet sind.

6. Presse nach mindestens einem der Ansprüche 1 bis 5,
**dadurch gekennzeichnet,**
**dass** das Transportband in dem Bereich, auf dem das Werkstück (1) aufliegt, horizontal und vertikal gasdurchlässig ausgebildet ist.

7. Presse nach Anspruch 6,
**dadurch gekennzeichnet,**
**dass** zwischen dem Transportband (4) und der Unterseite (6) der Vakuumkammer (14) eine Schutzfolie vorgesehen ist.

8. Presse nach mindestens einem der Ansprüche 1 bis 7,
**dadurch gekennzeichnet,**
**dass** eine zwischen dem Werkstück (1) und der Membran (11) angeordnete, gasdichte Trennfolie (5) vorgesehen ist, die einen Kontakt der Membran (11) mit aus dem Werkstück (1) austretenden Gasen verhindert.

9. Presse nach mindestens einem der Ansprüche 1 bis 8,
**dadurch gekennzeichnet,**
**dass** eine zwischen dem Werkstück (1) und der Membran (11) angeordnete Trennfolie (5) vorgesehen ist, die die Membran (11) innerhalb der Vakuumkammer (14) überdeckt und so gegenüber dem Produktraum (16) vollständig abdeckt.

10. Presse nach mindestens einem der Ansprüche 1 bis 9,
**dadurch gekennzeichnet,**
**dass** eine zwischen dem Werkstück (1) und der Membran (11) angeordnete Trennfolie (5) vorgesehen ist, die an ihrer dem Werkstück (1) zugewandten Oberfläche solcherart strukturiert ist, dass ein Gastransport entlang dieser Oberfläche möglich ist.

11. Presse nach mindestens einem der Ansprüche 1 bis 10,
**dadurch gekennzeichnet,**
**dass** die Membran (11) an ihrer dem Werkstück (1) zugewandten Oberfläche solcherart strukturiert ist, dass ein Gastransport entlang dieser Oberfläche möglich ist.
